# EUROPÄISCHE PATENTANMELDUNG

(11) **EP 1 873 690 A1**
(43) Veröffentlichungstag der Anmeldung: **02.01.2008**
(21) Anmeldenummer: 06013563.9
(22) Anmeldetag: 30.06.2006
(51) Int. Cl.: G06K 19/077

(54) **Verfahren zur Pulkerfassung mittels RFID-Tagging**

(71) Anmelder: Sinn, Hansjörg, 61273 Wehrheim (DE)
(72) Erfinder: Sinn, Hansjörg, 61237 Wehrheim (DE); Wltschek, Gernot, 63303 Dreieich (DE)

(57) **Zusammenfassung**

Verbessertes Verfahren zur Pulkerfassung mittels RFID-Tagging, bei welchem man
einen Pulk aufweisend eine Mehrzahl von Gebinden bereitstellt, von denen jedes mit einem individuellen RFID-Tag umfassend ein Trägermaterial, einen Mikrochip sowie eine Antenne versehen ist, wobei jedes RFID-Tag eines jeden gebindes ein für die jeweilige Verpackungseinheit charakteristisches, individuelles Transpondersignal sendet; die für jedes Gebinde charakteristischen, individuellen Transpondersignale zeitgleich mit einem Lesegerät in einem Lesevorgang oder mehreren Lesevorgängen erfasst; und die erfassten Transpondersignale rechnergestützt auswertet und den bezüglich jedes Gebindes vorbekannten und gespeicherten Daten zuordnet; dadurch gekennzeichnet, dass man jedes der Gebinde innerhalb des Pulks so mit einem RFID-Tag versieht, dass die gegenseitige Beeinflussung und Wechselwirkung (=Kopplung) der von den individuellen RFID-Tags zweier innerhalb des Pulks benachbarter Gebinde gesendeten Signale unmöglich oder weitestgehend vermieden wird. Dies kann man einerseits durch den Einsatz asymmetrischer Antennen bei den Transpondern erreichen und andererseits durch eine asymmetrische Anbringung der Etiketten auf den Gebinden.

## Beschreibung

Die vorliegende Erfindung betrifft ein verbessertes Verfahren zur Pulkerfassung mittels RFID-Tagging. Insbesondere richtet sich die Erfindung auf ein Verfahren gemäß Oberbegriff des Anspruchs 1.

Das Kürzel RFID steht für "Radio Frequency IDentification". Bei der RFID-Technik geht es um die automatische Identifikation per Funkübertragung. Ein RFID-System besteht immer aus einem Transponder (Datenträger), einem Lesegerät und einer Antenne, wobei die Antenne auch im Lesegerät integriert sein kann.

Der Transponder selbst besteht aus einem Mikrochip, der mit einer Antenne verbunden ist. Auf diesem Chip ist immer mindestens eine weltweit einmalige Seriennummer gespeichert. Bei bestimmten Typen lassen sich noch zusätzliche Daten auf dem Chip speichern. Die Daten können per Funk ausgelesen und geschrieben werden, wobei kein Sichtkontakt zwischen dem Transponder und dem Lesegerät bestehen muss. Man kann also durch Verpackungen wie z. B. Kartons hindurch ein Objekt identifizieren ohne es zu sehen. Der Transponder selbst kann beispielsweise in ein Etikett eingebettet oder darauf geklebt sein, wobei das Etikett selbst wiederum auf beliebige Weise auf einem Gebinde befestigt werden kann, vorzugsweise wird es geklebt.

Durch so genannte Antikollisionsverfahren besteht die Möglichkeit, mehrere Transponder gleichzeitig mit einem Lesegerät zu identifizieren. Dieser Vorgang (die zeitgleiche Erfassung von bis zu mehreren hundert Transpondern in einem Lesefeld eines Lesegerätes) wird auch als "Pulkerfassung" bezeichnet. Bei den bekannten Antikollisionsverfahren wird eine Mehrzahl von Transpondersignalen erfasst und es wird üblicherweise mittels so genannter Antikollisionsalgorithmen auf mathematischem Wege verhindert, dass Daten verschiedener Transponder im Lesegerät miteinander kollidieren und damit unlesbar sind. Diese softwaremäßige Lösung des Kollisionsproblems führt jedoch nicht in allen Bereichen zum gewünschten Erfolg. Insbesondere in Packeinheiten, bei denen mehrere hundert Gebinde, wie Behälter, Kanister oder Flaschen, in einem großen Karton enthalten oder auf einer Palette zusammen angeordnet sein können, sind die mittels herkömmlicher Verfahren selbst unter Anwendung exzellenter Antikollisionsalgorithmen erzielbaren Auflösungen unzureichend. In der Praxis sind Auslesegenauigkeiten bei Pulkerfassung von teilweise weniger als 90 % nicht tolerierbar.

Insbesondere bei Verpackungseinheiten mit vorwiegend zylindrischer Gestalt, wie z.B. Flaschen, ist die Auslesegenauigkeit bei Großgebinden bislang schlecht.

Eine in der Praxis bekannte Möglichkeit die Auslesegenauigkeit bezüglich solch zylindrischer Flaschen zu steigern besteht nun darin, die Gebinde innerhalb der Packeinheit, des großen Kartons oder der Palette in einer bestimmten Anordnung voneinander beabstandet relativ zueinander zu fixieren. Diese Separation der Gebinde kann beispielsweise durch Zwischenwände, Aufnahmen oder Fächer innerhalb des Pulks oder der Packeinheit erfolgen. Hierdurch kann die Auslesegenauigkeit auf meist schon tolerierbare Werte gesteigert. Nachteilig daran bleibt jedoch, dass die Packeinheiten in Form von Kartons, Pulk- oder Umverpackungen sowie Paletten deutlich aufwändiger ausgeführt werden müssen. Durch Trennwände, Einlagen, Zwischenlagen oder Fächer steht weniger Raum für die Gebinde zur Verfügung. Ein zusätzlicher Materialaufwand geht also einher mit einer Verringerung des Raumangebots für die Verpackungseinheiten, so dass sich insgesamt logistische Nachteile durch voluminösere, aufwändigere und kostspieligere Ausführungsformen ergeben. Zudem gestaltet sich das Abpacken derart aufgebauter Packeinheiten zeitintensiver, was wiederum einen weiteren logistischen Nachteil bedeutet.

Angesichts der beschriebenen Nachteile des Standes der Technik lag der Erfindung die Aufgabe zugrunde ein einfaches Verfahren anzugeben, welches die Auslesesicherheit bei der Pulkerfassung auf tolerierbare Werte, d.h. vorzugsweise > 99,5 % Genauigkeit, verbessert. Das neue Verfahren soll dabei insbesondere auch die zeitgleiche, schnelle und sichere Erfassung einer Vielzahl von Transpondersignalen von Gebinden innerhalb eines Pulks ermöglichen, wobei sehr viele, typischerweise mehr als 500 und häufig bis zu 1000 Gebinde zeitgleich mit hoher Sicherheit, d.h. einer Auslesegenauigkeit von größer als 99,9 %, erfassbar sein sollen. Schließlich ist es weiters eine Aufgabe der Erfindung hierbei auf Hilfsmittel wie Fächer, Einlagen, Separierhilfen, zusätzliche Umhüllungen, Abstandshalter oder Zwischenböden und dergleichen für die einzelnen Gebinde zur speziellen Separierung der Gebinde voneinander innerhalb des Pulks, zu verzichten. Dennoch sollen kanisterförmige, vor allem zylindrische, und vorzugsweise flaschenförmige Gebinde mit höchster Genauigkeit erkennbar sein.

Gelöst werden diese sowie weitere nicht im einzelnen aufgeführte jedoch für den Fachmann ohne weiteres aus den einleitenden Erörterungen erschließbare Aufgaben durch ein Verfahren mit allen Merkmalen des Anspruchs 1. Bevorzugte Verfahrensabwandlungen werden in den auf den unabhängigen Anspruch zurück bezogenen abhängigen Ansprüchen unter Schutz gestellt.

Dadurch, dass man bei einem Verfahren zur Pulkerfassung mittels RFID-Tagging, bei welchem man
einen Pulk aufweisend eine Mehrzahl von Gebinden bereitstellt, von denen jedes mit einem individuellen RFID-Tag umfassend ein Trägermaterial, einen Mikrochip sowie eine Antenne versehen ist, wobei jedes RFID-Tag eines jeden Gebindes eine für das jeweilige Gebinde charakteristische, individuelle Kennung aufweist;
die für jedes Gebinde charakteristischen, individuellen Kennungen mit einem Lesegerät in einem Lesevorgang oder mehreren Lesevorgängen erfasst; und
die erfassten Kennungen rechnergestützt auswertet und den bezüglich jedes Gebindes vorbekannten und gespeicherten Daten zuordnet;
jedes der Gebinde innerhalb des Pulks so mit einem RFID-Tag versieht, dass die gegenseitige Beeinflussung und Wechselwirkung der von den individuellen RFID-Tags zweier benachbarter Gebinde innerhalb des Pulks gesendeten Signale unmöglich oder weitestgehend vermieden wird,
gelingt es auf überraschende und nicht ohne weiteres vorhersehbare Weise, die Auslesegenauigkeit von RFID-Signalen auf bis zu 100 % der im Pulk vorhandenen erfassbaren Gebinde zu steigern und zwar selbst bei schwierigen Geometrien der Verpackungseinheiten, wie zum Beispiel bei Kanistern, Flaschen, Zylindern, Rohren und dergleichen mehr. Darüber hinaus sind folgende weitere Vorteile mit dem Verfahren der Erfindung erzielbar:

In einer besonderen Abwandlung lässt sich das Verfahren der Erfindung mit an sich bekannten RFID-Tags verwirklichen. Es kann demnach eine Vielzahl bekannter Designs von RFID-Tags eingesetzt werden. Demzufolge ist die Erfindung mit bekannten und einfachen Mitteln und schließlich sehr kostengünstig und effizient durchführbar.

In noch einer besonderen Ausgestaltung des erfindungsgemäßen Verfahrens werden spezielle Antennendesigns zur Verwirklichung der Erfindung eingesetzt. Hierbei ist der Einsatz der entsprechenden RFID-Tags besonders zweckmäßig, da mit bekannten vorhandenen Etikettiermaschinen gearbeitet werden kann, ohne dass bei Verpackungsstrassen aufwendigere Umbauten oder Anpassungen nötig würden. Auch in diesem Fall ist also die Durchführung der Erfindung mit einfachen Mitteln und höchster Effizienz möglich.

Zur eindeutigen Auslesbarkeit einer großen Zahl von individuellen Signalen der einzelnen Transponder einer Vielzahl von Gebinden in einer Verpackungseinheit macht sich die Erfindung unter anderem den Umstand zunutze, dass durch eine bestimmte Lage von benachbarten Antennen relativ zueinander, eine gegenseitige Beeinflussung oder Wechselwirkung der individuellen Antennensignale reduziert oder gänzlich ausgeschlossen wird. Die Vermeidung dieses im Sprachgebrauch der Erfindung auch als "Kopplung" bezeichneten Effekts trägt zur Verwirklichung der Erfindung bei, ohne dass die Erfindung auf die Erklärung des Effekts beschränkt ist.

Der Begriff "Transponder" bezeichnet im Rahme der Erfindung einen elektronischen Datenträger, der berührungslos gelesen und beschrieben werden kann. Der Transponder umfasst einen Mikrochip zur Datenspeicherung und eine Antenne zur Kommunikation mit einem Reader = Lesegerät.

Unter "RFID-Tag" wird im Rahmen der Erfindung ein Label, Klebeschildchen oder Etikett verstanden, das ein Trägermaterial sowie einen Transponder, also einen Mikrochip zur Informationsspeicherung individueller Informationen sowie eine Antenne zur Übertragung der gespeicherten individuellen Information mittels Radiofrequenzen umfasst. Es kann sich im Rahmen der Erfindung sowohl um aktive als auch passive RFID-Tags handeln, d.h. solche mit eigener bzw. ohne eigene Stromversorgung. Bevorzugt wird das Verfahren der Erfindung mit passiven RFID-Tags durchgeführt.

Beim Trägermaterial handelt es sich in der Regel um flächige Materialien aus Faserstoffen wie Papier oder um Kunststoffe oder um Mischformen. Häufig sind Mikrochip und Antenne in mehrlagige Etiketten "eingebettet". Hierbei kann eine der äußeren Schichten selbstklebend ausgebildet sein. Eine für die Erfindung mit besonderem Vorteil einsetzbare Ausführungsform eines "RFID-Tags" ist das sogenannte "Smart Label". Hierbei handelt es sich um eine "papierdünne" Bauform eines RFID-Transponders; durch Einlaminierung in eine Papierschicht und gleichzeitige Klebebeschichtung werden RFID-Klebeetiketten erzeugt.

Der Begriff "RFID-Tagging", wie er im Zusammenhang mit der Erfindung gebraucht wird, bezeichnet nun den Einsatz von RFID-Tags zur eindeutigen Identifizierung einer Mehrzahl von Gebinden innerhalb eines Pulks oder einer Packeinheit.

Das RFID-Tag wird nach an sich bekannten Verfahren "beschrieben", d.h. es werden beispielsweise per Funksignal individuelle Daten auf dem Mikrochip des RFID-Tags gespeichert. Zur Anbringung des RFID-Tags auf dem jeweiligen individuellen Gebinde kann man im Sinne der Erfindung alle an sich bekannten Verfahren einsetzen, die eine sichere Befestigung des RFID-Tags auf dem Gebinde gestatten. Hierzu gehören z.B. alle bekannten Etikettierverfahren. Bevorzugt wird das RFID-Tag auf das Gebinde geklebt.

Die Form des RFID-Tags selbst (also des Etiketts oder Labels) ist im Allgemeinen beliebig, vorzugsweise sind die RFID-Tags rechteckig oder quadratisch, es sind aber genauso gut runde oder ovale Etikettformen möglich und mit Erfolg für die Erfindung einsetzbar.

Unter "Kopplung der von den individuellen RFID-Tags zweier in einer Packeinheit benachbarter Gebinde gesendeten Signale" wird nun für die Erfindung im Prinzip jede elektromagnetische Wechselwirkung zwischen den Signalen oder gegenseitige Beeinflussung verstanden, welche die eindeutige Signalerfassung des individuellen Transpondersignals eines RFID-Tags erschwert oder unmöglich macht. Insbesondere wird hierunter eine gegenseitige Beeinflussung der Transpondersignale zweier in einem Pulk räumlich benachbarter RFID-Tags oder Transponder verstanden, die eine einwandfreie Erfassung, Auslesung und/oder Zuordnung der Signale selbst unter Einsatz von Antikollisionssoftware unmöglich macht oder doch zumindest weitgehend erschwert und damit zu Ausleseungenauigkeiten führt.

Im Rahmen der Erfindung hat sich nun überraschenderweise herausgestellt, dass die Auslesegenauigkeit auf bis zu 100 % gesteigert werden kann, wenn man jedes Gebinde innerhalb des Pulks so mit einem RFID-Tag versieht, dass die Kopplung der von den individuellen RFID-Tags zweier benachbarter Gebinde innerhalb der Packeinheit gesendeten Signale unmöglich gemacht oder weitestgehend vermieden wird. Es war besonders überraschend in diesem Zusammenhang zu finden, dass eine geometrische Abschattung von Transpondersignalen individueller Transponder innerhalb des Pulks nur von untergeordneter Bedeutung für die Auslesegenauigkeit zu sein scheint. Hingegen scheint eine mögliche Wechselwirkung oder Beeinflussung (=Kopplung) der Signale zweier benachbarter RFID-Tags von besonderem Interesse zu sein.

Die Möglichkeit der Kopplung der Transpondersignale zweier in einem Gebinde benachbarter RFID-Tags zu reduzieren und/oder aufzuheben, lässt sich erfindungsgemäß auf verschiedene Weisen verwirklichen. Eine bevorzugte Ausführungsform der Erfindung sieht vor, dass man Gebinde mit RFID-Tags versieht und einsetzt, bei denen eine flächige Projektion der Antennengrundform, d.h. der Antenne ohne Anschlüsse, des RFID-Tags auf das Trägermaterial (= Papierschicht, Klebeschicht und dergleichen) wenigstens im Bezug auf eine Achse in der durch das Trägermaterial aufgespannten Ebene nicht symmetrisch ist.

Antenne kann grundsätzlich jede beliebige Spule sein. Häufig handelt es sich bei den Antennen der RFID-Tags um dünne längliche Drähte aus leitendem Material, die mit dem Chip (Speichereinheit) des Transponders verbunden sind. Es kann sich aber genauso um relativ schmale auf einen Träger oder in ein Gehäuse z.B. durch Aufdampfen auf- bzw. eingebrachte Bahnen aus Leitmaterial (vergleichbar Leiterbahnen) handeln. Im Prinzip sind Antennen also dreidimensionale Gebilde.

Für die Verwirklichung der Erfindung betrachtet man nun zunächst eine flächige = zweidimensionale Projektion der Antennengrundform. Diese Betrachtung umfass zunächst zwei Schritte. In einem ersten Schritt ist die Antenne als flächiges zweidimensionales Gebilde zu betrachten. Hierbei geht man so vor, dass man die Antenne in die durch das Trägermaterial des RFID-Tags aufgespannte Ebene projiziert. Die dabei resultierende flächige Projektion der Antenne ist dann in einem zweiten Schritt auf die Grundform der Antenne zu reduzieren. Hierunter ist im Sinne der Erfindung die nach der Projektion der Antenne in die Fläche erhaltene Form der Antenne vermindert um die Anschlussbahnen zum Mikrochip des Transponders zu verstehen.

Die auf diese Weise in der Trägerebene resultierende zweidimensionale flächige Projektion der Antennengrundform weist nun im Rahmen der Erfindung eine Asymmetrie auf, insofern sie wenigstens in Bezug auf eine Achse nicht symmetrisch ist.

Eine besonders bevorzugte Abwandlung des erfindungsgemäßen Verfahrens sieht nun vor, dass man als Antenne eine L-förmige Antenne einsetzt. Hierunter wird verstanden, dass die Projektion der Antenne wie oben beschrieben eine Anordnung des Antennendrahtes oder der Leiterbahn ergibt, bei der die beiden resultierenden miteinander verbundenen Schenkel einen annähernd rechten Winkel ergeben, wobei die Länge der beiden Schenkel verschieden ist. Ein solches Antennengebilde ist asymmetrisch, weist also keine Achsensymmetrie im Zweidimensionalen auf. Im Gegensatz dazu sei auf eine aus dem Stand der Technik bekannte Ausführung in Loop- oder Schleifenform gemäß Figur B1 verwiesen. Diese sind symmetrisch bezüglich einer gedachten Achse im Zweidimensionalen. Hierbei kann man also eine Achse durch die zweidimensionale Projektion der Antenne legen, so dass ein Gebilde mit wesentlicher Achsensymmetrie entsteht. Die Loop- oder Schleifenantenne ist somit nicht asymmetrisch.

Eine weitere bevorzugte Ausführungsform des Verfahrens der Erfindung sieht vor, dass man Gebinde mit RFID-Tags einsetzt, wobei die Gebinde eine vertikale Achse bezüglich des Pulks aufweisen und die RFID-Tags bezüglich der vertikalen Achse der Gebinde asymmetrisch angeordnet sind. Hierbei handelt es sich also darum, dass nicht die Antennen selbst asymmetrisch sind; vielmehr können auch symmetrische Antennen eingesetzt werden, aber die RFID-Tags werden so auf den Gebinden angeordnet und angebracht, dass die RFID-Tags zweier benachbarter Gebinde nicht vollständig deckungsgleich aneinander und aufeinander zuliegen kommen können. Eine 100 % ige Überlappung der Antennen zweier Transponder im Pulk wird dadurch unmöglich, was zum überraschenden Effekt der Steigerung der Auslesegenauigkeit führt. Bei dieser Ausführungsform ist zweckmäßig dafür Sorge zu tragen, dass die Gebinde in der Packeinheit nur um eine vertikale Achse frei bewegbar sind, eine Bewegung um eine horizontale Achse der Verpackungseinheit sollte weitgehend ausgeschlossen werden.

Die Etiketten und damit auch die Antennen als Bestandteil der Etiketten werden bei dieser Ausführungsform bevorzugt so angebracht, dass eine vertikale Achse des Gebindes und eine horizontale Achse des Etiketts einen Winkel miteinander bilden, der im Bereich von > 0° bis < 90° liegt. Sehr zweckmäßig ist das Etikett so "schräg" auf dem Gebinde angeordnet, dass der angesprochene Winkel im Bereich von 30° bis 60° liegt. Besonders günstig sind Winkel zwischen 40° und 50°.

Besonders vorteilhafte Verfahrensmodifikationen umfassen,
dass man als Gebinde mit RFID-Tags versehene Flaschen einsetzt, wobei die Flaschen eine vertikale Achse entlang ihres im wesentlichen zylindrischen Flaschenkörpers aufweisen und die RFID-Tags in Form von rechteckigen Etiketten diagonal zur vertikalen Achse der Flaschen angeordnet sind. Der Winkel zwischen horizontaler Achse des Etiketts und vertikaler Flaschenachse liegt bevorzugt bei etwa 45°.

Nachfolgend wird die Erfindung an Hand von Versuchen und Vergleichsversuchen auch unter Bezugnahme auf die beigefügten Figuren eingehender erläutert.

In den Figuren bedeuten:
Figur A1: Eine Darstellung einer Loop-Antenne des Readers;
Figur A2: Eine Darstellung einer L-Antenne des Readers;
Figur B1: Schematische Darstellung eines RFID-Tags (Etiketts/Smart-Labels) mit nicht erfindungsgemäßer Rechteckgrundform der Antenne;
Figur B2: Schematische Darstellung eines RFID-Tags (Etiketts/Smart-Labels) mit erfindungsgemäßer L-Grundform der Antenne;
Figur B 2.1: Eine Variation der L-Grundform der Antenne aus B2;
Figur C: Prinzipdarstellung eines Systems zum RFID-Tagging;
Figur D: Flasche mit symmetrisch zur vertikalen Flaschenachse angebrachtem Transponder (Etikett aus Figuren. B);
Figur E: Räumlich angedeutete Darstellung einer Leseantenne (Loop-Form) durch die eine Großgebinde geführt wird;
Fig. F: perspektivischer Blick von oben auf ein Großgebinde aufweisend eine Vielzahl von Flaschen; und
Fig. G: Eine Flasche mit asymmetrisch (diagonal) aufgebrachtem Transponder (Etikett) aus Figuren B.

### Eingesetzte Geräte und Materialien:

### Schreib-/Lesegerät und Software:

In den Versuchen wurde ein Long-Range-Schreib-/Lesegerät nach ISO15693 verwendet. Das Gerät arbeitet auf der weltweit verfügbaren ISM-Frequenz von 13.56 MHz und benutzt zur Kommunikation mit den Transpondern den ISO-Standard 15693.

Als Testsoftware wurde ein Standard-Programm "Item Identification" eingesetzt, erhältlich von der Firma Tricon Consulting / Traun, Austria.

### Antenne des Schreib-/Lesegerätes (Readers)

Für die Tests wurde beim Lesegerät zwei unterschiedliche Antennentypen eingesetzt. Beide Antennen unterschieden sich in der Form. In den meisten der Versuche kam eine Antenne mit L-förmiger Geometrie (Fig. A2) zum Einsatz. Diese wird folgend mit L-Antenne bezeichnet. Die andere der eingesetzten Antennen war "schleifenförmig" und wird als Loop-Antenne (Fig. A1) bezeichnet. Die Loop-Antenne weist ein grundsätzlich zweidimensionales Feld auf und empfiehlt sich für große Reichweiten. Die L-Antenne besitzt zwar eine etwas geringere Reichweite als eine vergleichbare Loop-Antenne. Dafür verfügt die L-Antenne allerdings über eine quasi "dreidimensionale Lesewirkung" bei entsprechender Transponderführung.

### Transponder

Als Testtransponder (abgekürzt TRP) wurden Datenträger mit einem Chip nach IS015693 und einer Inlaygröße von 45 x 75 mm eingesetzt. Figur B1 zeigt exemplarisch ein als selbstklebendes Etikett ausgeführtes RFID-Tag 1' (sogenanntes Smart-Label) mit Träger 5', Microchip 2' und Antenne 3'. Die Grundform der in den Versuchen eingesetzten Antenne in der Projektion auf die Trägerebene des RFID-Tags war rechteckig. Diese Antenne ist achsensymmetrisch, beispielsweise in Bezug auf jede der beiden in Figur B1 vertikal und horizontal gestrichelt angedeuteten gedachten Achsen. Diese Antennengrundform wird daher im Sinne der Erfindung als symmetrisch bezeichnet.

Im Gegensatz dazu zeigt Fig. B2 eine L-förmige Antenengrundform. Diese ist asymmetrisch, da sich keine Symmetrieachse finden lässt.

Die die Transponder aufweisenden Etiketten (Smart-Label) wurden einerseits stehend (horizontal oder vertikal) wie auch diagonal außen auf die Gebinde in Form von zylindrischen Flaschen aufgeklebt. Hierbei kam es zu einer entsprechenden Anordnung der Transponder auf den Flaschen, d.h. horizontal oder vertikal beziehungsweise diagonal.

Ein schematischer Aufbau des eingesetzten RFID-Systems ist in Figur C dargestellt. 1 bedeutet einen Transponder. 2 steht für eine Antenne des Lesegerätes. 3 für den Reader und 4 für ein Auswertsystem aus Rechner und Software. Die von den Transpondern gesendeten Signale werden vom Schreib-/Lesegerät mittels Antenne erfasst und die so erfassten Daten werden über die serielle Schnittstelle an den PC mit der Testsoftware übertragen. Dort erfolgt der Eintrag in eine Datenbank (doppelte Lesungen werden ausgeschieden) und die Ergebnisse werden angezeigt.

### Gebinde:

In Figur D wird ein Gebinde in Form einer Flasche dargestellt. Längs des im Wesentlichen zylindrischen Flaschenkörpers weist die Flasche ein Etikett aus Figur B auf. Dieses Rechteck-Etikett ist vertikal und parallel zu der gestrichelt eingezeichneten Vertikalachse der Flasche auf dem Flaschenumfang befestigt.

In Figur G erkennt man ebenfalls eine Flasche, allerdings weist sie ein diagonal angebrachtes Etikett aus Figur B auf. "Diagonal" meint in diesem Fall, dass das Etikett im Bezug auf die Vertikalachse der Flasche in einem Winkel aufgebracht ist, der etwa 45° beträgt. Mit anderen Worten, es bilden die obere Kante des Etiketts und die Vertikalachse der Flasche einen Winkel von ca. 45° aus.

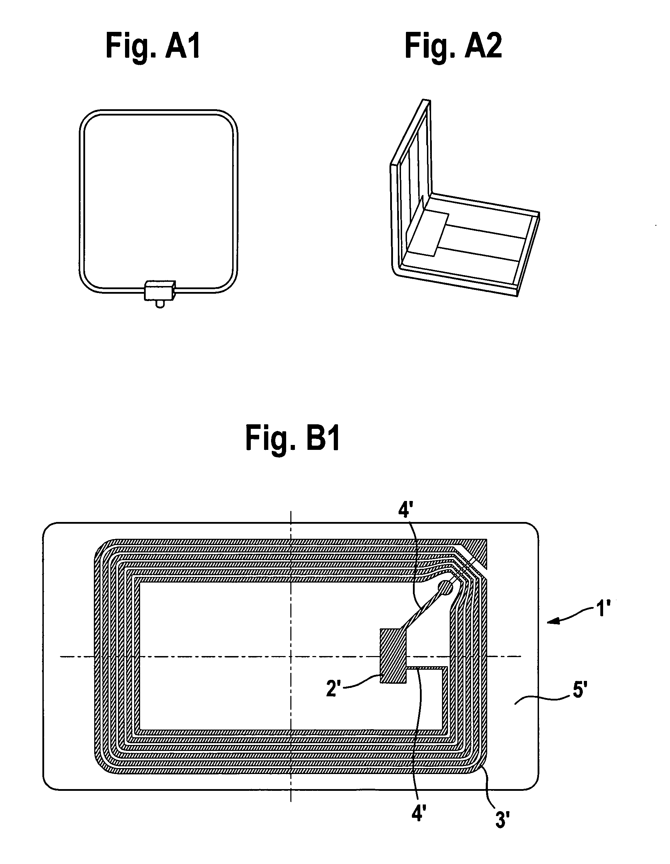

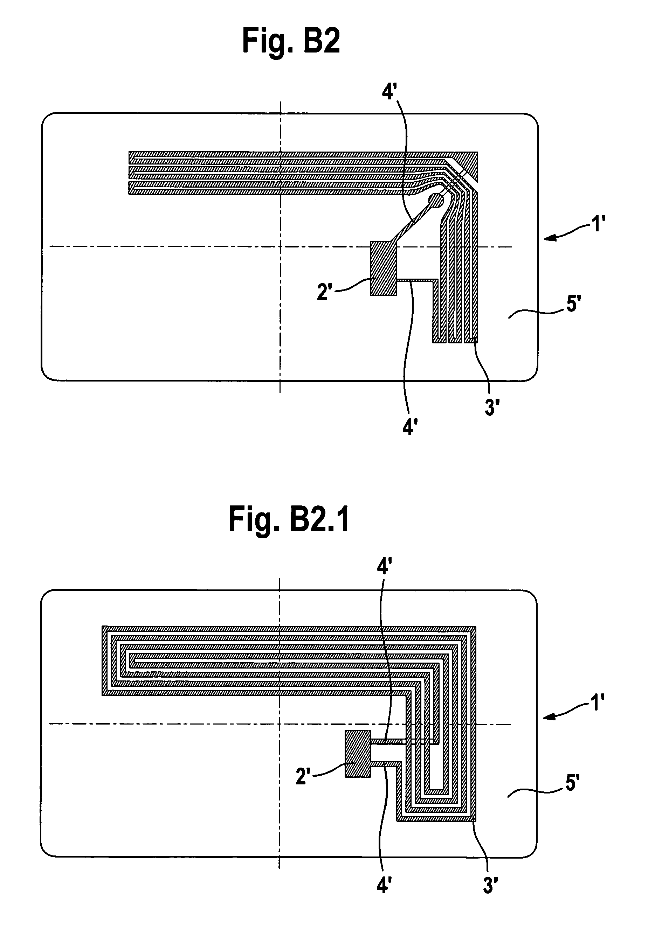

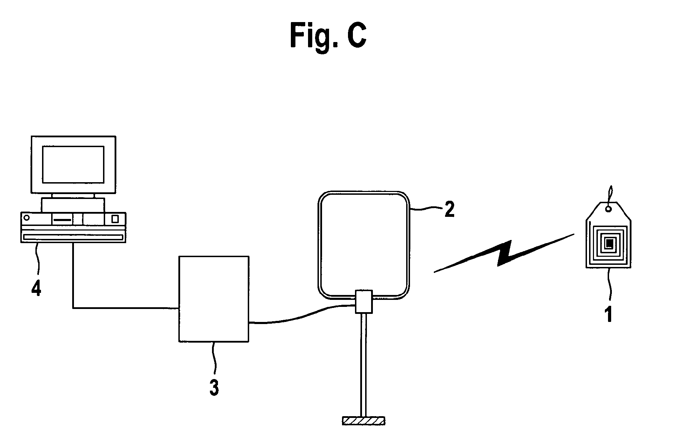

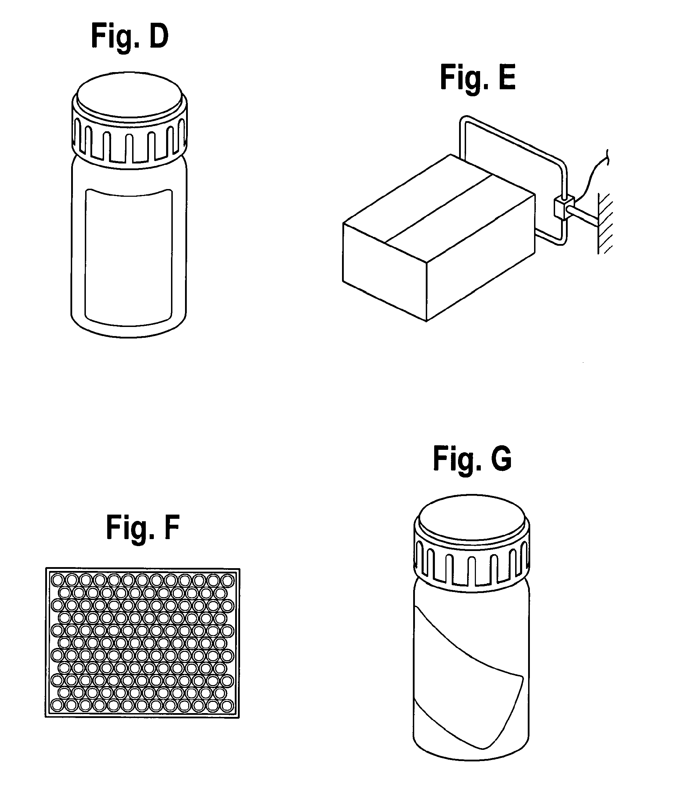

Die Figur F dient zur Verdeutlichung eines Großgebindes/einer Packeinheit mit einer Vielzahl von Flaschen, die in enger Anschmiegung innerhalb des Großgebindes / der Packeinheit angeordnet sind. Die Flaschen stehen nebeneinander und sind nicht durch Fächer, Böden oder Einlagen getrennt.

Schließlich wird in Figur E verdeutlicht, wie ein Großgebinde in Form eines geschlossenen Kartons enthaltend eine Vielzahl von Gebinden durch eine schlaufenförmige Antenne eines Lesegeräts geführt wird, um die Transpondersignale der Gebinde auszulesen. In den meisten Versuchen wurde anstatt einer schlaufenförmigen Antenne beim Lesegerät eine L-förmige Antenne verwendet. Eine solche ist beispielhaft in Figur A2 dargestellt.

### Versuchsdurchführung und Ergebnisse:

### V.1 Vergleichsversuche mit Großgebinde

Es wurden gezählte 857 Flaschen = 857 Gebinde in einer Box (1150x760x490mm) auf einer Palette mit TRP ausgezeichnet (TRP vertikal auf Flaschenumfang, Antenne wie in Fig. A) und es wurde eine ringförmige Loop-Antenne des Lesegeräts von allen erreichbaren Seiten um die Box geführt.

| n_ges= 857 | | | | | | | | | | |
|---|---|---|---|---|---|---|---|---|---|---|
| Versuchs# | 1 | 2 | 3 | 4 | 5 | 6 | 7 | 8 | 9 | 10 |
| n_read | 798 | 811 | 815 | 804 | 823 | 791 | 807 | 789 | 805 | 818 |
| % | 93,1% | 94,6% | 95,1% | 93,8% | 96,0% | 92,3% | 94,2% | 92,1% | 93,9% | 95,4% |
| Mittelwert 94,1 % | | | | | | | | | | |

Die durchschnittliche Lesezeit betrug ca. 40s und es konnten max. 96% aller Tags gelesen werden.

Die weiteren Versuche wurden mit kleineren Gebinden durchgeführt. Die Auswirkungen von wahlweise eingesetztem Füllmaterial sowie sämtliche weiteren Versuchsabwandlungen sind vom Kleingebinde auf das Großgebinde übertragbar.

### V.2 Vergleichsversuche mit Kleingebinde ohne Inhalt

Es wurden jeweils 70 Flaschen mit TRP gekennzeichnet (TRP vertikal auf Flaschenumfang) und in einer passenden Karton-Box (450x330x280mm) verpackt (auf die Ausrichtung der Flaschen wurde aus Gründen der Praxisnähe kein Wert gelegt, d.h. Überlappung der TRP war möglich).

Die Karton-Box wurde in horizontaler Richtung in drei verschiedenen Arten über die L-Antenne gezogen. Die nachfolgenden Tabellen geben die Zahl der ausgelesenen Verpackungseinheiten, den prozentualen Anteil sowie Lesezeit und Lesebewegung für die jeweilige Versuchsreihe wieder.

### V2a

Kleingebinde (70 Flaschen)
Flaschen leer
TRP vertikal auf Flasche
Transponderantennengrundform: Rechteck
Einfachbewegung
Lesegerät: L-Antenne
Lesedauer ca. 7 s.

| n_ges= 70 | | | | | | | | | | |
|---|---|---|---|---|---|---|---|---|---|---|
| Versuchs# | 1 | 2 | 3 | 4 | 5 | 6 | 7 | 8 | 9 | 10 |
| n read | 66 | 66 | 63 | 65 | 61 | 65 | 62 | 64 | 63 | 66 |
| % | 94,3% | 94,3% | 90,0% | 92,9% | 87,1% | 92,9% | 88,6% | 91,4% | 90,0% | 94,3% |
| Mittelwert 91,6% | | | | | | | | | | |

### V2b

Kleingebinde (70 Flaschen)
Flaschen leer
TRP vertikal auf Flasche
Transponder: Antennengrundform: Rechteck
Zweifachbewegung,
Lesegerät: L-Antenne
Lesedauer ca. 10 s

| n_ges= 70 | | | | | | | | | | |
|---|---|---|---|---|---|---|---|---|---|---|
| Versuchs# | 1 | 2 | 3 | 4 | 5 | 6 | 7 | 8 | 9 | 10 |
| n read | 61 | 64 | 67 | 62 | 66 | 67 | 69 | 69 | 69 | 69 |
| % | 87,1% | 91,4% | 95,7% | 88,6% | 94,3% | 95,7% | 98,6% | 98,6% | 98,6% | 98,6% |
| Mittelwert 94,7% | | | | | | | | | | |

### V2c

Kleingebinde (70 Flaschen)
Flaschen leer
TRP vertikal auf Flasche
Transponder: Antennengrundform: Rechteck
Zweifachbewegung mit Drehung
Lesegerät: L-Antenne
Lesedauer ca. 12 s.

| n_ges= 70 | | | | | | | | | | |
|---|---|---|---|---|---|---|---|---|---|---|
| Versuchs# | 1 | 2 | 3 | 4 | 5 | 6 | 7 | 8 | 9 | 10 |
| n read | 68 | 70 | 66 | 69 | 68 | 69 | 68 | 68 | 68 | 69 |
| % | 97,1% | 100,0% | 94,3% | 98,6% | 97,1% | 98,6% | 97,1% | 97,1% | 97,1% | 98,6% |
| Mittelwert 97,6% | | | | | | | | | | |

Bei den Versuchen wurde neben der Dauer des Lesevorganges auch die Art variiert, auf welche die Box durch die L-förmige Antenne des Lesegerätes bewegt wurde. Hierbei wird verstanden unter:

### Einfachbewegung:

Karton-Box einmal über die Antenne gezogen

### Zweifachbewegung:

Karton-Box ein zweites Mal in gleicher Orientierung über die Antenne gezogen Zweifachbewegung mit Drehung:

Einmal durchgezogen, gedreht, ein zweites Mal durchgezogen.

Die genannten Bewegungsarten kamen auch bei den folgenden Versuchen zum Einsatz, sofern nichts anderes beschrieben ist.

### V.3 Vergleichsversuche mit Kleingebinde (gefüllt) mit vertikalen TRP

Versuche wurden durchgeführt wie zuvor, jedoch mit dem Unterschied, dass die Flaschen mit organischem Material befüllt wurden (glattes Mehl).

### V3a

Kleingebinde (70 Flaschen)
Flaschen gefüllt mit glattem Mehl
TRP vertikal auf Flasche
Transponder Antennengrundform: Rechteck
Einfachbewegung,
Lesegerät: L-Antenne
Lesedauer ca.7s

| n_ges= 70 | | | | | | | | | | |
|---|---|---|---|---|---|---|---|---|---|---|
| Versuchst | 1 | 2 | 3 | 4 | 5 | 6 | 7 | 8 | 9 | 10 |
| n_read | 58 | 57 | 57 | 57 | 58 | 57 | 61 | 81 | 61 | 61 |
| % | 82,9% | 81,4% | 81,4% | 814% | 80,0% | 81,4% | 87,1% | 87,1% | 87,1% | 87,1% |
| Mittelwert 83,7 % | | | | | | | | | | |

### V3b

Kleingebinde (70 Flaschen)
Flaschen gefüllt mit glattem Mehl
TRP vertikal auf Flasche
Transponder: Antennengrundform: Rechteck
Zweifachbewegung
Lesegerät: L-Antenne
Lesedauer ca. 10s

| n_ges= 70 | | | | | | | | | | |
|---|---|---|---|---|---|---|---|---|---|---|
| Versuchs# | 1 | 2 | 3 | 4 | 5 | 6 | 7 | 8 | 9 | 10 |
| n read | 61 | 62 | 60 | 56 | 59 | 61 | 60 | 62 | 61 | 60 |
| % | 87,1% | 88,6% | 85,7% | 80,0% | 84,3% | 87,1% | 85,7% | 88,6% | 87,1% | 85,7% |
| Mittelwert 86,0 % | | | | | | | | | | |

### V3c

Kleingebinde (70 Flaschen)
Flaschen gefüllt mit glattem Mehl
TRP vertikal auf Flasche
Transponder: Antennengrundform: Rechteck
Zweifachbewegung mit Drehung
Lesegerät: L-Antenne
Lesedauer ca. 12 s

| n_ges= 70 | | | | | | | | | | |
|---|---|---|---|---|---|---|---|---|---|---|
| Versuchs# | 1 | 2 | 3 | 4 | 5 | 6 | 7 | 8 | 9 | 10 |
| n read | 64 | 64 | 65 | 64 | 63 | 64 | 63 | 65 | 65 | 65 |
| % | 91,4% | 91,4% | 92,9% | 91,4% | 90,0% | 91,4% | 90,0% | 92,9% | 92,9% | 92,9% |
| Mittelwert 91,7 % | | | | | | | | | | |

### V.4 Vergleichsversuche Kleingebinde TRP vertikal mit Lesegerät-L-Antenne mit erhöhter Sendeleistung

Die Versuche wurden wie oben durchgeführt, die Sendeleistung des Readers allerdings erhöht.

### V4a

Kleingebinde (70 Flaschen)
Flaschen leer
TRP vertikal auf Flasche
Transponder: Antennengrundform: Rechteck
Einfachbewegung
Lesegerät: L-Antenne, erhöhte Sendeleistung
Lesedauer ca. 7 s

| n"ges= 70 | | | | | | | | | | |
|---|---|---|---|---|---|---|---|---|---|---|
| Versuchs# | 1 | 2 | 3 | 4 | 5 | 6 | 7 | 8 | 9 | 10 |
| n read | 60 | 58 | 62 | 63 | 62 | 57 | 56 | 62 | 57 | 64 |
| % | 85,7% | 82,9% | 88,6% | 90,0% | 88,6% | 81,4% | 80,0% | 88,6% | 81,4% | 91,4% |
| Mittelwert 85,9% | | | | | | | | | | |

### V4b

Kleingebinde (70 Flaschen)
Flaschen leer
TRP vertikal auf Flasche
Transponder: Antennengrundform: Rechteck
Zweifachbewegung,
Lesegerät: L-Antenne, erhöhte Sendeleistung
Lesedauer ca. 10 s

| n_ges= 70 | | | | | | | | | | |
|---|---|---|---|---|---|---|---|---|---|---|
| Versuchs# | 1 | 2 | 3 | 4 | 5 | 6 | 7 | 8 | 9 | 10 |
| n read | 60 | 62 | 61 | 63 | 63 | 64 | 59 | 61 | 61 | 63 |
| % | 85,7% | 88,6% | 87,1% | 90,0% | 90,0% | 91,4% | 84,3% | 87,1% | 87,1% | 90,0% |
| Mittelwert 88,1% | | | | | | | | | | |

### V4c

Kleingebinde (70 Flaschen)
Flaschen leer
TRP vertikal auf Flasche
Transponder: Antennengrundform: Rechteck
Zweifachbewegung mit Drehung,
Lesegerät: L-Antenne, erhöhte Sendeleistung
Lesedauer ca. 12 s

| n_ges= 70 | | | | | | | | | | |
|---|---|---|---|---|---|---|---|---|---|---|
| Versuchs# | 1 | 2 | 3 | 4 | 5 | 6 | 7 | 8 | 9 | 10 |
| n read | 66 | 67 | 66 | 67 | 68 | 67 | 69 | 68 | 69 | 67 |
| % | 94,3% | 95,7% | 94,3% | 95,7% | 97,1% | 95,7% | 98,6% | 97,1% | 98,6% | 95,7% |
| Mittelwert 96,3% | | | | | | | | | | |

### E.1 Erfindungsgemäße Versuche mit Kleingebinde (gefüllt) mit diagonalen TRP

Versuche wie oben (Flaschen mit Mehl gefüllt, Vergleichsversuche V3a bis V3c), die TRP wurden alle ca. im 45°-Winkel diagonal aufgeklebt - somit wurde die Möglichkeit einer 100%igen Überlappung zweier im Pulk benachbarter Antennen vermieden.

### E1a

Kleingebinde (70 Flaschen)
Flaschen gefüllt mit glattem Mehl
TRP diagonal auf Flasche
Transponder: Antennengrundform: Rechteck
Einfachbewegung,
Lesegerät: L-Antenne
Lesedauer ca.7s

| n_ges= 70 | | | | | | | | | | |
|---|---|---|---|---|---|---|---|---|---|---|
| Versuchs# | 1 | 2 | 3 | 4 | 5 | 6 | 7 | 8 | 9 | 10 |
| n read | 62 | 66 | 61 | 64 | 63 | 63 | 62 | 62 | 63 | 61 |
| % | 88,6% | 94,3% | 87,1% | 91,4% | 90,0% | 90,0% | 88,6% | 88,6% | 90,0% | 87,1% |
| Mittelwert 89,6% | | | | | | | | | | |

### E1b

Kleingebinde (70 Flaschen)
Flaschen gefüllt mit glattem Mehl
TRP diagonal auf Flasche
Transponder: Antennengrundform: Rechteck
Zweifachbewegung
Lesegerät: L-Antenne
Lesedauer ca.10 s

| n_ges= 70 | | | | | | | | | | |
|---|---|---|---|---|---|---|---|---|---|---|
| Versuchs# | 1 | 2 | 3 | 4 | 5 | 6 | 7 | 8 | 9 | 10 |
| n read | 65 | 87 | 65 | 68 | 66 | 67 | 63 | 66 | 67 | 67 |
| % | 92,9% | 95,7% | 92,9% | 97,1% | 94,3% | 95,7% | 90,0% | 94,3% | 95,7% | 95,7% |
| Mittelwert 94,4% | | | | | | | | | | |

### E1c

Kleingebinde (70 Flaschen)
Flaschen gefüllt mit glattem Mehl
TRP diagonal auf Flasche
L-Antenne
Zweifachbewegung mit Drehung
Lesegerät: L-Antenne
Lesedauer ca.12 s

| n_ges = 70 | | | | | | | | | | |
|---|---|---|---|---|---|---|---|---|---|---|
| Versuchs# | 1 | 2 | 3 | 4 | 5 | 6 | 7 | 8 | 9 | 10 |
| n read | 70 | 70 | 70 | 70 | 70 | 69 | 70 | 70 | 69 | 70 |
| % | 100,0 | 100,0 | 100,0 | 100,0 | 100,0 | 98,6 | 100,0 | 100,0 | 98,6 | 100,0 |
| Mittelwert 99,7% | | | | | | | | | | |

### E.2 Erfindungsgemäße Versuche Kleingebinde mit TRP diagonal mit Lese-Loop-Antenne

Bei diesen Versuchen wurde das Kleingebinde mit den 70 befüllten Flaschen an der Loop-Antenne mittig in horizontaler Richtung vorbeigezogen (oder auch auf dem gleichen Weg zurück) oder vor der Antenne um 180° gedreht.

Diese Drehung simuliert sozusagen eine Karton-Box auf einem Drehtisch vor einer stehenden Antenne.

### E2a

Kleingebinde (70 Flaschen)
Flaschen gefüllt mit glattem Mehl
TRP diagonal auf Flasche
Transponder: Antennengrundform: Rechteck
Einfachbewegung,
Lesegerät: Loop-Antenne
Lesedauer ca.7s

| n_ges= 70 | | | | | | | | | | |
|---|---|---|---|---|---|---|---|---|---|---|
| Versuchs# | 1 | 2 | 3 | 4 | 5 | 6 | 7 | 8 | 9 | 10 |
| n read | 70 | 70 | 70 | 65 | 70 | 70 | 70 | 70 | 70 | 70 |
| % | 100,0% | 100,0% | 100,0% | 92,9% | 100,0% | 100,0% | 100,0% | 100,0% | 100,0% | 100,0% |
| Mittelwert 99,3% | | | | | | | | | | |

### E2b

Kleingebinde (70 Flaschen)
Flaschen gefüllt mit glattem Mehl
TRP diagonal auf Flasche
Transponder: Antennengrundform: Rechteck
Zweifachbewegung,
Lesegerät: Loop-Antenne
Lesedauer ca. 10 s

| n_ges= 70 | | | | | | | | | | |
|---|---|---|---|---|---|---|---|---|---|---|
| Versuchs* | 1 | 2 | 3 | 4 | 5 | 6 | 7 | 8 | 9 | 10 |
| n read | 70 | 70 | 70 | 70 | 70 | 70 | 70 | 70 | 70 | 70 |
| % | 100,0% | 100,0% | 100ₛ0% | 100,0% | 100,0% | 100,0% | 100ₛ0% | 100,0% | 100,0% | 100,0% |
| Mittelwert 100,0% | | | | | | | | | | |

### E2c

Kleingebinde (70 Flaschen)
Flaschen gefüllt mit glattem Mehl
TRP diagonal auf Flasche
Transponder: Antennengrundform: Rechteck
Zweifachbewegung mit Drehung
Lesegerät: Loop-Antenne
Lesedauer ca.12 s

| n_ges= 70 | | | | | | | | | | |
|---|---|---|---|---|---|---|---|---|---|---|
| Versuchs# | 1 | 2 | 3 | 4 | 5 | 6 | 7 | 8 | 9 | 10 |
| n read | 70 | 70 | 70 | 70 | 70 | 70 | 70 | 70 | 70 | 70 |
| % | 100,0% | 100,0% | 100,0% | 100,0% | 100,0% | 100,0% | 100,0% | 100ₕ0% | 100,0% | 100,0% |
| Mittelwert 100,0% | | | | | | | | | | |

Ein Vergleich der Versuche V3a-V3c mit E1a-E1c zeigt die Überlegenheit des Verfahrens der Erfindung. Bei der Reihe von Vergleichsversuchen V3a-V3c wurde mit einem Smart-Label gearbeitet, das vertikal auf die Flaschen geklebt wurde. Bei der ansonsten hinsichtlich der Versuchsparameter identischen Versuchsreihe E1a-E1c wurden im Unterschied zu V3a-V3c die Smart-Label lediglich diagonal auf die Flaschen geklebt, in einem Winkel von etwa 45°. Bei der Auslesevariante: "Einfachbewegung" konnte die Genauigkeit der Auslesung im Mittel von 83,7 auf 89,6 % gesteigert werden. Im Fall der Auslesevariante: "Zweifachbewegung" gelang eine mittlere Steigerung von 86,0 auf 94,4 % und schließlich resultierte in der Variante c (Zweifachbewegung mit Drehung) eine Verbesserung des Mittelwertes für die Genauigkeit von 91,7 auf 99,7 %. Hierdurch wird ersichtlich, dass mit der diagonalen Anbringung der Smart Label auf den Gebinden unter ansonsten gleichen Bedingungen ein erheblicher Vorteil bezüglich der mittleren Auslesegenauigkeit erzielbar ist, wie er beispielsweise mit Veränderung des Inhalts der Gebinde, Erhöhung der Sendeleistung des Schreib/Lesers oder Variation der Antennengeometrie des Schreib/Lesers nicht ohne weiteres erzielbar ist. Ganz besonders überzeugend sind die Ergebnisse der Versuchsreihe E2a - E2c. Bei diesen Versuchen in Übereinstimmung mit der Erfindung konnten durch Variation der Geometrie der Antenne des Schreib/Lesers in Kombination mit der diagonalen Anbringung der Smart-Label auf den Flaschen in jedem Einzelversuch mit Ausnahme eines einzigen Falles Zuverlässigkeit von 100 % erreicht werden. Im Mittel lag die Genauigkeit der Erkennung bei 99,3 %, 100 % und 100 %. Diese Ergebnisse sind für eine Umsetzung in die Praxis bestens geeignet.

## Patentansprüche

1. Verbessertes Verfahren zur Pulkerfassung mittels RFID-Tagging, bei welchem man
einen Pulk aufweisend eine Mehrzahl von Gebinden bereitstellt, von denen jedes mit einem individuellen RFID-Tag umfassend ein Trägermaterial, einen Mikrochip sowie eine Antenne versehen ist, wobei jedes RFID-Tag eines jeden gebindes ein für das jeweilige Gebinde charakteristisches, individuelles Transpondersignal sendet;
die für jedes Gebinde charakteristischen, individuellen Transpondersignale zeitgleich mit einem Lesegerät in einem Lesevorgang oder mehreren Lesevorgängen erfasst; und
die erfassten Transpondersignale rechnergestützt auswertet und den bezüglich jedes Gebindes vorbekannten und gespeicherten Daten zuordnet;
**dadurch gekennzeichnet,**
**dass** man jedes der Gebinde innerhalb des Pulks so mit einem RFID-Tag versieht, dass die gegenseitige Beeinflussung und Wechselwirkung (= Kopplung) der von den individuellen RFID-Tags zweier innerhalb des Pulks benachbarter Gebinde gesendeten Signale unmöglich oder weitestgehend vermieden wird.

2. Verfahren zur Pulkerfassung mittels RFID-Tagging nach Anspruch 1,
**dadurch gekennzeichnet,**
**dass** man Gebinde mit RFID-Tags einsetzt, bei denen eine flächige Projektion der Antennengrundform des RFID-Tags wenigstens im Bezug auf eine Achse der durch das Trägermaterial aufgespannten Ebene nicht symmetrisch ist.

3. Verfahren zur Pulkerfassung mittels RFID-Tagging nach Anspruch 2,
**dadurch gekennzeichnet, dass** man Gebinde mit RFID-Tags einsetzt, deren Antennengrundform L-förmig ist.

4. Verfahren zur Pulkerfassung mittels RFID-Tagging nach Anspruch 1,
**dadurch gekennzeichnet,**
**dass** man Gebinde mit RFID-Tags einsetzt, wobei die Gebinde eine vertikale Achse bezüglich des Pulks aufweisen und die RFID-Tags bezüglich der vertikalen Achse der Gebinde asymmetrisch angeordnet sind.

5. Verfahren zur Pulkerfassung mittels RFID-Tagging nach Anspruch 4,
**dadurch gekennzeichnet,**
**dass** man als Gebinde mit RFID-Tags versehene Flaschen einsetzt, wobei die Flaschen eine vertikale Achse entlang ihres im wesentlichen zylindrischen Flaschenkörpers aufweisen und die RFID-Tags in Form von rechteckigen Etiketten diagonal zur vertikalen Achse der Flaschen angeordnet sind.
